# EUROPEAN PATENT SPECIFICATION

(11) **EP 0 767 995 B1**
(45) Date of publication and mention of the grant of the patent: **05.04.2006**
(21) Application number: 96910292.0
(22) Date of filing: 11.01.1996
(51) Int. Cl.: H04B 1/707, H04B 7/08

(54) **METHOD AND APPARATUS FOR SIGNAL ACQUISITION AND CHANNEL ESTIMATION USING MULTIPLE ANTENNAS**
VERFAHREN UND EINRICHTUNG ZUR SIGNALERFASSUNG UND KANALSCHÄTZUNG UNTER VERWENDUNG MEHRERER ANTENNEN
PROCEDE ET APPAREIL D'ACQUISITION DE SIGNAUX ET D'EVALUATION DE CANAUX RECOURANT A DES ANTENNES MULTIPLES

(30) Priority: 07.03.1995 US 399662
(43) Date of publication of application: 16.04.1997
(73) Proprietor: MOTOROLA, INC., Schaumburg, IL 60196 (US)
(72) Inventor: STEWART, Kenneth, A., Chicago, IL 60067 (US)
(74) Representative: Openshaw, Paul Malcolm
(86) International application number: PCT/US1996/000189
(87) International publication number: WO 1996/027961

(56) References cited:
- EP-A- 0 474 491
- US-A- 5 099 494
- US-A- 5 103 459
- US-A- 5 204 874
- US-A- 5 363 401
- US-A- 5 579 338

## Description

### Field of the Invention

The present invention relates, in general, to a communications system, and in particular to a method and apparatus for signal acquisition and channel estimation using multiple antennas in a wireless communications system.

### Background of the Invention

In recent years a variety of techniques have been used to provide multi-user mobile communications within a limited radio-frequency spectrum. These methods have included frequency division multiple access (FDMA), time division multiple access (TDMA), and code division multiple access (CDMA) or, more usually, hybrids of these methods. All of these methods have been employed within the past decade in the design of commercial cellular telecommunications systems: witness the use of FDMA in the North American AMPS (Advanced Mobile Phone Service) system, FD(frequency division)/TDMA in the European Groupe Speciale Mobile (GSM) standard, and - more recently - the adoption of a direct sequence FD/CDMA approach by the United States Cellular Telecommunications Industry Association (CTIA) as embodied in the IS-95-A (Interim Standard 95-A) standard. A full specification of the IS-95-A cellular radio system appears in CTIA Standard IS-95-A, "Mobile Station-Base Station Compatibility Standard for Dual-Mode Wideband Spread Spectrum System," PN-3421 version 0.07, available from the CTIA.

An important element of IS-95-A-type and similar systems concerns the digital signal processing circuitry - sometimes termed the "searcher" - implemented at the base station (BS) and mobile station (MS) receivers in order to perform a) initial direct sequence acquisition, and b) channel estimation in support of the rake receiver designs typically used in IS-95-A radios.

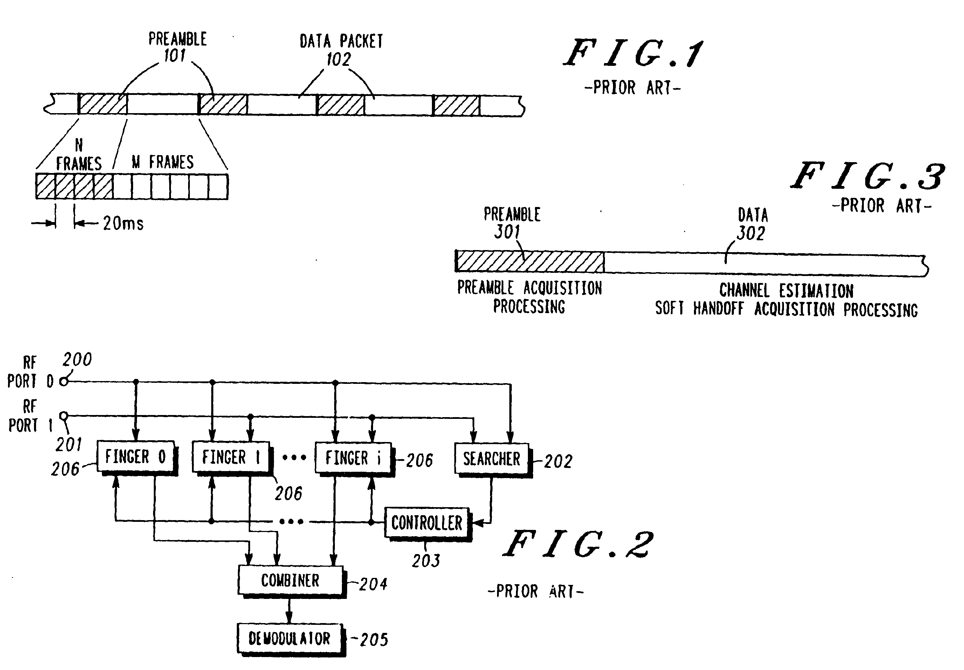

In an IS-95-A system. the BS must acquire the MS under several distinct scenarios. First, the MS may be attempting to transmit signaling data (usually to support call origination, subscriber unit registration, and so on) on the reverse link slotted-ALOHA Access channel. As shown in FIG. 1, each MS transmission consists of an N-frame preamble sequence **101,** followed by the M-frame data sequence containing the data packet **102.** During the preamble phase of each slot, the BS must first identify the presence of an MS transmission (or possibly select amongst several contending transmissions) and then "acquire" the MS by synchronizing at least one direct sequence despreading element (or "finger") to the received signal. In the case where the receiver is observing a channel characterized by time-dispersive multipath, the receiver may elect to use several fingers - one assigned to each multipath component - which are then combined together to form the signal presented to the demodulator.

This process is shown in much-simplified form for a dual-port receiver in FIG. 2. In FIG. 2 searcher element **202** analyses the signal received at the receiver ports **200, 201** during preamble transmission, and passes the resulting data to a controller **203.** The controller **203** then selects the antenna port from which each of a finite number of despreading elements (or "fingers" **206)** should receive the received signal, the corresponding despreading delay Δᵢ at which each finger should operate, and hence the particular multipath component each finger will present to the combiner **204** and ultimately to the demodulator **205.** As is well known, the use of a preamble sequence which is known a-priori to the searcher improves the signal-noise ratio (SNR) of the signal detection and channel estimation procedure implemented in the searcher, and can also simplify the searcher circuitry. Note also that the range of time-delays which must be examined by the searcher is reduced by the system timing data made available to the MS on the IS-95-A downlink, which ensures that the received signal will be retarded relative to the BS time reference only by the two-way RF (radio frequency) propagation delay and by group delay through the intermediate frequency and baseband filtering stages of the BS receiver. The BS is therefore only required to search for synchronization over an "uncertainty region" of several tens of microseconds, where the extent of the region is bounded by the design cell radius and hence RF propagation delay.

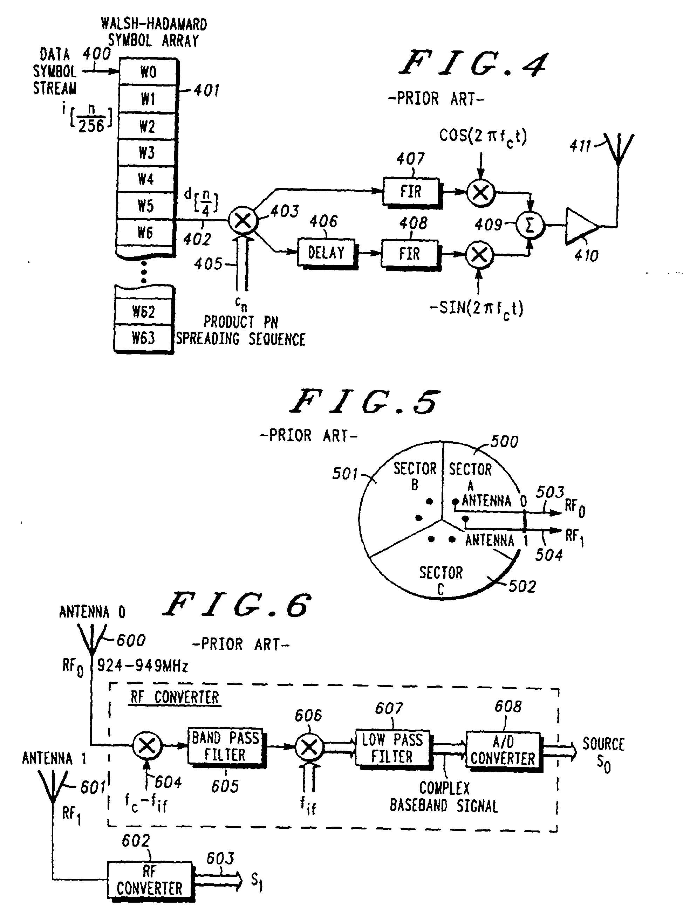

A second scenario in which the BS is required to acquire the MS is during call setup following a request for service from either the land or mobile side of an IS-95-A system. Consider a mobile origination (the land origination is similar and need not be distinguished). The MS first sends an Origination Message to the BS via the Access channel, to which the BS responds by allocating a forward link channel (distinguished by its unique Walsh cover sequence as described in CTIA Standard IS-95-A), beginning transmission of a null-data sequence, and instructing the MS via a Paging Channel Assignment Message as to the forward link Walsh code assignment. The MS then begins receiving the null-data frames on the forward link, and - after receiving a certain number of valid frames - commences transmission of an unmodulated sequence on the reverse link. The BS must then acquire the MS transmission via the preamble sequence, signal to the MS (via the Base Station Acknowledgment Order) that successful acquisition has been achieved, and begin transmitting Traffic channel frames (usually containing encoded voice data) to the MS. The resulting MS transmission process appears in FIG. 3, separated into preamble transmission **301** and data transmission **302** phases. The combined acquisition and channel estimation procedure described above for the Access channel preamble detection problem is also performed here, with the exception that acquisition processing is only performed once during the preamble transmission phase indicated in FIG. 3.

A third scenario which requires the BS to acquire the MS transmission is in the case of a "soft handoff," where an MS moves into a region between two cells or cell sectors and the second BS is required to acquire and demodulate the MS, thereby achieving a form of "macro-diversity." In this case, the acquisition process must be performed on modulated data since no preamble is available from the MS. As will be seen later, this modifies the design of the searcher circuitry, and reduces the SNR of the search process.

Even after the acquisition process is complete, the searcher is still used to perform channel estimation. This is especially important for Traffic channel demodulation where the evolution of the multipath channel with time means that the optimal port assignment and delays Δᵢ for each finger **206** in FIG. 2 may change. Under some circumstances, proper control of finger assignment is critical to maximizing the amount of power recovered by a rake receiver with a finite number of fingers, and this can have important implications on the capacity of an IS-95-A cellular system.

The performance of the searcher, both as a means of achieving rapid and reliable acquisition and accurate channel estimation, is therefore an important aspect of an IS-95-A receiver. In what follows, emphasis will be placed on the implementation of the searcher at the base station, and the invention will be described in that context. It is clear, however, that the invention may equally be applied to a suitably equipped mobile station.

US-A-5 103 459 discloses a system and method for communicating information signals using spread spectrum communication techniques. PN sequences are constructed that provide orthogonality between the users so that mutual interference will be reduced, allowing higher capacity and better link performance. With orthogonal PN codes, the cross-correlation is zero over a predetermined time interval, resulting in no interference between the orthogonal codes, provided only that the code time frames are time aligned with each other. In an exemplary embodiment, signals are communicated between a cell-site and mobile units using direct sequence spread spectrum communication signals. In the cell-to-mobile link, pilot, sync, paging and voice channels are defined. Information communicated on the cell-to-mobile link channels are, in general, encoded, interleaved, bi-phase shift key (BPSK) modulated with orthogonal covering of each BPSK symbol along with quadrature phase shift key (QPSK) spreading of the covered symbols. In the mobile-to-cell link, access and voice channels are defined. Information communicated on the mobile-to-cell link channels are, in general, encoded, interleaved, orthogonal signalling along with QPSK spreading.

### Summary of the Invention

In a first aspect, the present invention provides a method of determining a decision value for one of the group consisting of acquisition and channel estimation of a received spread spectrum signal, as claimed in claim 1.

In a further aspect, the present invention provides a receiver, including first and second antennas, operable for determining a decision value for one of the group consisting of acquisition and channel estimation of a received spread spectrum signal, as claimed in claim 7.

### Brief Description of the Drawings

FIG. 1 is a diagram illustrating a prior art uplink channel structure such as may be used with the invention;
FIG. 2 is a block diagram illustrating a prior art receiver;
FIG. 3 is a diagram illustrating a further prior art uplink channel structure such as may be used with the invention;
FIG. 4 is a block diagram illustrating a prior art transmitter;
FIG. 5 is a diagram illustrating a prior art base site plan;
FIG. 6 is a block diagram illustrating a prior art receiver;
FIG. 7 is a block diagram of a receiver for signal acquisition and channel estimation;
FIG. 8 is a block diagram of a preferred embodiment of a receiver for signal acquisition and channel estimation according to the invention.

### Detailed Description of The Drawings

These problems and others are solved by the present invention which, in a first embodiment, is a receiver including at least two antennas operable for receiving different segments of the same signal, an element for processing the different segments so as to determine separate signal characteristic (e.g., energy) values for the segments, and an accumulator for accumulating the energy values so as to form a decision statistic for use in acquisition or channel estimation. Additional embodiments are also described. A key difference between this and prior art approaches is the use of both antennas in passing the different (e.g., consecutive) segments as information for use in acquisition and channel estimation, rather than relying on just the active branch, i.e., one signal path, for the energy information. By alternately taking information from both branches a significant improvement in acquisition/ estimation is realized, at a minor cost in additional processing.

Turning now to FIG. 4, the structure of an IS-95-A mobile station modulator and transmitter is shown in block diagram form. In FIG. 4, an information sequence *i(k)* **400** is presented to a 64-ary orthogonal modulator **401** whose signaling alphabet comprises the length-64 Walsh-Hadamard sequences. In the case of data transmission, the information sequence *i(k)* **400** is the output of a convolutional code applied to the source information data (which may itself consist of primary and secondary information sources), while in the case of preamble transmission the information sequence is simply the all-zero sequence, resulting in continuous transmission of the zero-th Walsh symbol, W₀. Following Walsh symbol selection, the transmitted Walsh chip sequence d(k) **402** made up of the component values of each Walsh-Hadamard sequence is overlaid via mixer **403** with the quadrature PN product code **405** generated from the short and long PN sequences. After delaying via delay **406** the quadrature component of the resulting complex signal by T_{c}/2 (T_{c} is the chip period of 814 ns (nanosecond) in IS-95-A) in order to obtain the desired OQPSK (offset quaternary phase shift keyed) spread waveform, the signal is filtered via FIRs **407, 408,** modulated to passband via mixers **409,** and amplified **410** and transmitted via antenna **411.**

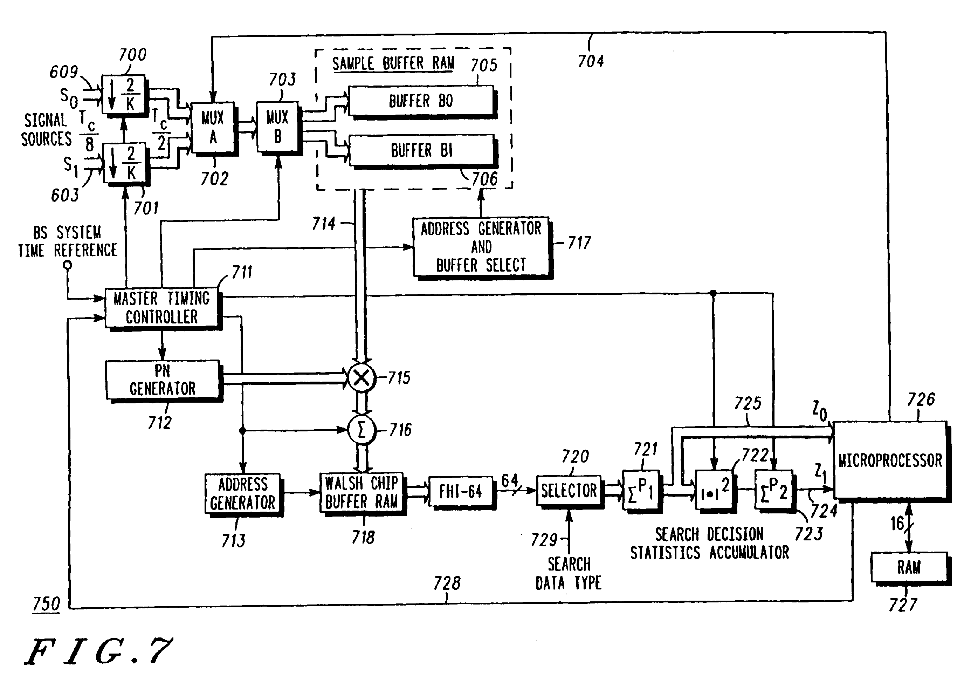

The MS transmission is typically recovered at an IS-95-A base station site using an antenna configuration similar to that shown in plan view in FIG. 5. This antenna configuration employs three pairs of directional receive antennas in sectors A-C **500,501,502** each with 120° beamwidth, with the antennas in any pair pointed towards the same azimuth, and with each pair separated in azimuth by 120° to form a "3-sector" site. In order to decorrelate the fading process observed by each antenna, the codirectional antennas are separated in space by several carrier frequency wavelengths. After prefiltering to exclude signals outside the cellular receive band of approximately 924-949 MHz, RF passband signals RF0 **505** and RF1 **506** are derived from antennas 0 **503** and 1 **504** in sector A **500,** or similarly, from the corresponding antennas in sectors B or C **501** or **502.** Signals RF0 **505** and RF1 **506** are then frequency downconverted to complex baseband form, possibly using the simplified apparatus of FIG. 6. In FIG. 6 the narrowband-modulated carrier frequency f_{c} received at antenna **600** (and similarly for antenna **601)** as signal RF0 **505** (and RF₁ **506** for antenna **601)** is mixed to the intermediate frequency f_{IF} via mixer **604** and bandpass filter **605** and ultimately to complex baseband form via quadrature mixer **606** and low pass filter **607.** Typically this apparatus employs additional functions such as an AGC (Automatic Gain Control) stage, but for simplicity these are not shown. The complex baseband signal is then sampled by an A/D converter pair **608,** usually at a sampling frequency which is some multiple K of the chip rate of 1.2288 MHz, to generate the discrete-time signal sources S0 **609** and S1 **603.** A typical value of K is eight.

The pair of signal sources S0 **609** and S1 **603** are then processed using the searcher circuitry shown in block diagram form in FIG. 7. The circuit illustrates a possible architectural implementation (although not known to be prior art) of a typical DS-SS (direct sequence spread spectrum) serial searcher functionality, in which a controlling device - shown here as a microprocessor - tests the hypothesis that the DS-SS signal transmitted by the MS is present at a particular delay by modifying the PN phase of a despreader to match the hypothesized delay, and then performing a statistical test on the result (the decision value or statistic) of accumulating the despreader output over a fixed period. Since the underlying modulation of the IS-95-A reverse link consists of discrete 64-ary Walsh symbols, this period is usually an integer number P of Walsh symbols. The decision statistic is then returned to the controlling microprocessor for storage before the microprocessor steps to the next hypothesized PN phase **728** and accumulates another P symbols. Typically, the microprocessor will advance (or retard) the hypothesized PN phase by T_{c}/2 per iteration. Note that although the terminology of decision statistic implies the objective of signal detection and hence the acquisition problem, the data returned to the controlling microprocessor may equally be used for channel estimation.

Consider first the operation of the receiver **750** circuit of FIG. 7, with multiplexer A **702** configured under control of the microprocessor antenna select control line **704** so as to source the sampled data used to form the decision statistic exclusively from either signal S0 **609** or S1 **603.** First, the controlling microprocessor **726** specifies to the timing controller **711** the selected PN phase for which the decision statistic is to be generated. The timing controller **711** then compares the selected PN phase against the BS system time reference signal **707,** and computes the instant at which the first sample of the each Walsh symbol would be received under the hypothesized delay implied by the selected PN phase. This establishes the time at which multiplexer B **703** will switch between RAM buffers B0 **705** and B1 **706** in order to partition the received sampled stream into sampled data from distinct Walsh symbols (multiplexer B 703 therefore switches at the Walsh symbol rate of 1/T_{w}, where T_{w} is the Walsh symbol duration). In order to despread the OQPSK spread transmission, the received signal is stored at T_{c}/2 sample rate, requiring buffers B₀ **705** and B₁ **706** to store length-512 complex sequences since each Walsh symbol comprises 256 PN chips. An address generator and buffer selector function **717** is shown performing management of the RAM banks in which the buffers are implemented.

After the final sample comprising each Walsh symbol has been received, the last sample buffer to which sampled data was written is operated on by the Walsh chip despreader **715.** In preparation for despreading, the timing controller **711** has already adjusted the state of the quadrature product PN generator **712** to the PN phase corresponding to transmitter spreading sequence at the start of the received Walsh symbol. This PN generator phase adjustment may be readily accomplished using a technique such as that described, for example, in U.S. Patent No. 5,228,054, although other designs are also possible. The timing controller **711** then clocks the samples **714** out of the current sample buffer, multiplies them via despreader **715** with the despreading sequence generated by the PN generator and stores them to the complex-valued integrate-and-dump Walsh chip accumulator **716.** The accumulator is dumped to the Walsh chip buffer every 8 samples, where addressing of the Walsh chip buffer RAM **718** is maintained by an address generator **713** under control of the timing controller **711.** After the Walsh chip buffer **718** is full, a 64-ary complex-valued Fast Hadamard Transformer (FHT) **719** performs a transform in order to implement the length-64 correlation with each possible transmitted Walsh symbol. The computational structure of the FHT is similar to that of the FFT (fast Fourier transform), and may be implemented using similarly efficient, and well known, techniques.

The output of the FHT **719** consists of a 64-ary complex vector, from which a single complex-valued element is selected either as a) the FHT output bin corresponding to correlation with Walsh symbol W0, or b) the FHT output whose complex magnitude or magnitude-squared value is greatest. This choice is made under control of the selector **720** which will use the W0 FHT bin during a search over unmodulated preamble data, or the maximum magnitude FHT bin during a search over modulated data. The resulting T_{w}-spaced sample stream is then integrated over a finite number of Walsh symbols, to form the final decision statistic associated with the selected PN phase. The exact form of the final integrate-and-dump procedure - and hence the decision statistic - depends on the channel and whether the search is performed over preamble or unmodulated data. In the case of a preamble search, the sequence of zero-th FHT outputs may be accumulated in complex-valued fashion in accumulator A1 **721** (this is sometimes referred to as "coherent" accumulation) over all P symbols comprising the decision statistic, which is also complex valued and shown as signal Z₀ **725** in FIG. 7. If the channel for a preamble search is rapidly fading or is subject to frequency offset, the integration process may be modified to accumulate P1 symbols in coherent fashion in accumulator A1 **721,** then take the magnitude or magnitude square of that intermediate result in element **722,** and accumulate a further P2 such results in accumulator A2 **723** to form the final real-valued decision statistic Z1 **724.** This form of non-coherent accumulation is usually applied to generate the decision statistic for modulated data searches, with P1 = 1 and P2 = P in that case.

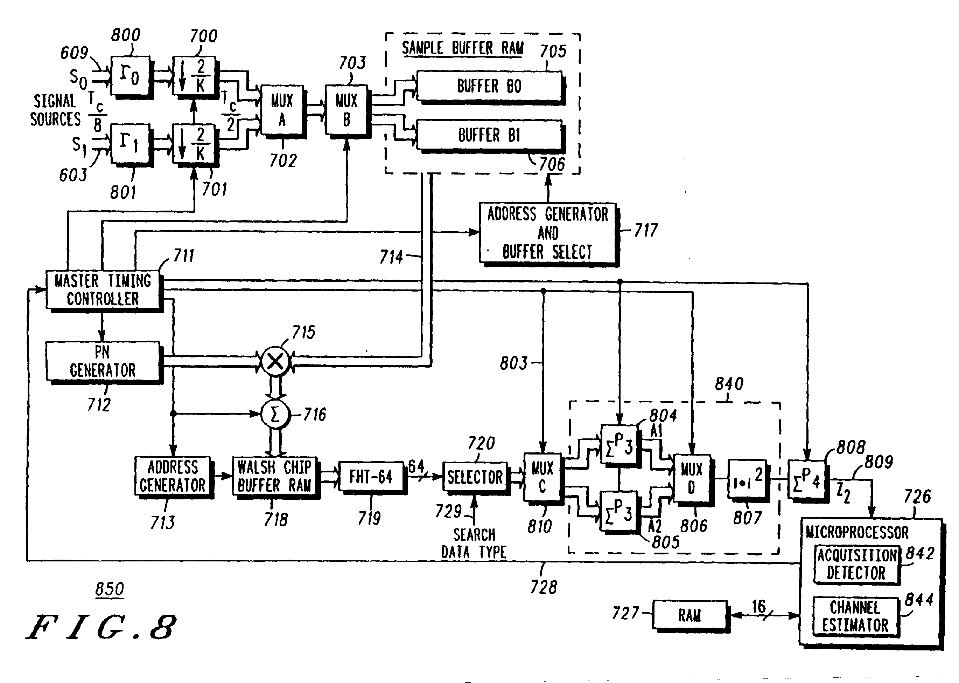

The availability of two antennas at each BS sector can be exploited to improve the performance of the searcher using the receiver **850** architecture of FIG. 8. In this approach, multiplexer A **702** no longer sources data exclusively from either source S0 **609** or S1 **603** during accumulation of each decision statistic. Rather multiplexer A **702** operates in tandem with multiplexers B **703,** C **810,** and D **806,** to generate a decision statistic which is a combination of data from sources S0 **609** and S1 **603.** The architecture of FIG. 8 can operate in 3 such modes. The first operating mode is termed "noncoherent mode." Operation of this mode is best illustrated by taking as an example the formation of the decision statistic over 8 Walsh symbols. The timing controller **711** first instructs multiplexers A **702** and B **703** to source sampled data (e.g., a first segment of the received spread spectrum signal) from source S0 **609** to buffer B0 **705.** Multiplexers C **810** and D **806** are fixed to pass the resulting selected FHT output (e.g., a demodulated (via mixer **715** and FHT **719),** first complex value segment) through accumulator A1 **804** (which performs no operation, i.e. P3 = 1) to the magnitude square function element **807** (to determine its signal characteristic value, e.g., an energy value) and ultimately into accumulator **808.** After the final sample comprising the first Walsh symbol is received, multiplexers A **702** and B **703** switch to source samples from source S1 **603** into buffer B1 **706.** The selected FHT output for that symbol is then accumulated via the magnitude square function element **807** into accumulator A3 **808.** (Accumulators **804** and **805** and magnitude square element **807** together form a signal characteristic determination stage, e.g., an energy determination stage **840.)** The process repeats until a total of 8 Walsh symbols have been received (i.e. P4 = 8), at which point the output of accumulator A3 **808** is dumped as the real valued decision statistic Z2 **809** to the microprocessor **726** (e.g., for further processing as an acquisition detector **842,** or as a channel estimator **844).**

In the second mode of operation - termed "coherent mode" - multiplexers A **702** and B **703** behave as before, sourcing data alternately from sources S0 **609** and S1 **603** to buffers B0 **705** and B1 **706.** The first FHT output (usually selected as the zero-th FHT output in this mode) is accumulated in complex form in accumulator A1 **804.** The second output is then accumulated in complex form in accumulator A2 **805,** the third output in accumulator A1 **804,** and so on until the 8th symbol is accumulated in A2 **805.** Accumulator A1 **804** is then dumped, via the magnitude square function element **807** through multiplexer D **806** to accumulator A3 **808.** The contents of accumulator A2 **805** are then similarly processed via magnitude square function element **807** and added to accumulator A3 **808,** with multiplexer D **806** switched to source from accumulator A2 **805.** The resulting real-valued contents of accumulator A3 **808** are then returned as decision statistic Z2 **809** to the microprocessor **726.** In this mode P3 = 4, and P4 = 2.

In the third and final mode of operation - termed "mixed mode" - multiplexers A **702** and B **703** behave as before, and multiplexer D **806** is initially positioned to source data from accumulator A1 **804.** The 1st and 3rd symbols (again, these will usually be the zero-th Walsh symbol in this mode) are then accumulated in complex fashion by A1 **804,** with the 2nd and 4th symbols accumulated by A2 **805.** Accumulator A1 **804** is then dumped via the magnitude square function element **807** into accumulator A3 **808.** Multiplexer D **806** is then switched, and accumulator A2 **805** is likewise dumped via the magnitude square function element **807** into A3 **808.** The 5th and 7th symbols are then accumulated in complex fashion in A1 **804**, the 6th and 8th symbols are accumulated in A2 **805,** and the magnitude square of the resulting values in A1 **804** and A2 **805** are dumped into A3 **808** for final reporting to the microprocessor **726** as decision statistic Z2 **809.** In this case P3 = 2. and P4 = 4.

The delay compensation elements **800** and **801** shown in FIG. 8 are optionally required to compensate for group delay variations in the RF, IF, and baseband processing stages of the RF converters shown in FIG. 6. The need for such delay compensation will depend on the design and manufacturing tolerance of the converters. The delay compensation elements **800** and **801** can be implemented by digital shift register circuits, or by adjusting the decimation phase of the decimators **700** and **701.** The required delays would typically be calibrated during manufacture, or automatically adapted by the receiver in field operation by measuring the average differential delay between rake elements observing the same received multipath component on different antennas. Note also that the architecture of FIG. 8 is intended to emphasize the changes to the architecture of FIG. 7, and would normally be designed to also implement the single antenna search modes supported by FIG. 7.

Clearly, the current art of monolithic integrated circuit manufacture will support implementation of the circuit of FIG. 8 on a VLSI (very large scale integration) device. Note that although the implementation shown in FIG. 8 inspects only one PN phase per received Walsh symbol, the circuit may be easily rendered capable of inspecting multiple PN phases per Walsh symbol by extending the sample data buffers, including extra memory for intermediate results storage, and operating the despreading, FHT, and integration circuitry at a higher clock rate. In general, the finger assignments resulting from this searcher design would be made in pairs under the assumption that the channel observed at each antenna is a different ensemble member of the same wide sense stationary uncorrelated scatterer (WSSUS) statistical model.

Although the invention has been described and illustrated with a certain degree of particularity, it is understood that the present disclosure of embodiments has been made by way of example only and that numerous changes in the arrangement and combination of parts as well as steps may be resorted to by those skilled in the art without departing from the invention as claimed. For example, antennas and demodulator portions of the preferred embodiment communication system as described were directed to CDMA spread-spectrum signals transmitted over a radio communication channel. However, as will be understood by those skilled in the art, the encoding and decoding techniques described and claimed herein can also be adapted for use in other types of transmission systems like those based on time division multiple access (TDMA) and frequency division multiple access (FDMA).

Likewise, although the design is shown to source data from two antennas, any number of antennas can be sequentially accessed to produce each decision variable. Further, the specifically cited circuitry for the embodiments may be implemented in any of a number of ways, such as using DSPs (digital signal processors) or one or more ASICs (application specific integrated circuits). Thus, it will be apparent to one skilled in the art that while the invention has been described in conjunction with specific embodiments thereof, it is evident that many alterations, modifications, and variations are possible in light of the foregoing description. Accordingly, the invention is intended to embrace all such alterations, modifications, and variations within the scope of the appended claims.

## Claims

1. A method of determining a decision value for one of the group consisting of acquisition and channel estimation of a received spread spectrum signal, comprising:
(a) receiving a first segment of the signal via a first antenna of a receiver and demodulating the first segment to form a first complex value segment;
(b) determining a first signal characteristic value of the first complex value segment;
(c) receiving a second segment of the signal via a second antenna of the receiver and demodulating the second segment to form a second complex value segment;
(d) determining a second signal characteristic value of the second complex value segment; and
(e) accumulating the first and second signal characteristic values and outputting the accumulated signal characteristic values as the decision value for use by one of the group consisting of a acquisition detector or a channel estimator.

2. The method of claim 1 wherein the first and second signal characteristic values, respectively, are first and second energy values, respectively.

3. The method of claim 2 further comprising the steps, following step (d), of:
(i) receiving a third segment of the signal via the first antenna and demodulating the third segment to form a third complex value segment;
(ii) determining a third energy value of the third complex value segment;
(iii) receiving a fourth segment of the signal via the second antenna and demodulating the fourth segment to form a fourth complex value segment;
(iv) determining a fourth energy value of the fourth segment; and
wherein step (e) further comprises accumulating third and fourth energy value with the first and second energy values, and outputting the accumulated first through fourth energy values as the decision value.

4. The method of claim 2 wherein:
step (b) further comprises accumulating the first complex value segment, receiving a third segment of the signal via the first antenna and demodulating the third segment to form a third complex value segment, accumulating the third complex value segment with the first complex value segment, and determining the first energy value from the accumulated first and third complex value segments; and
step (d) further comprises accumulating the second complex value segment, receiving a fourth segment of the signal via the second antenna and demodulating the fourth segment to form a fourth complex value segment, accumulating the fourth complex value segment with the second complex value segment, and determining the second energy value from the accumulated second and fourth complex value segments.

5. The method of claim 4 wherein step (e) further comprises:
receiving fifth and seventh segments of the signal via the first antenna and demodulating the fifth and seventh segments to form fifth and seventh complex value segments, accumulating the fifth and seventh complex value segments, and determining a third energy value from the accumulated fifth and seventh complex value segments;
receiving sixth and eighth segments of the signal via the second antenna and demodulating the sixth and eighth segments to form sixth and eighth complex value segments, accumulating the sixth and eighth complex value segments, and determining a fourth energy value from the accumulated sixth and eighth complex value segments; and
accumulating the third and fourth energy values with the first and second energy values and outputting the accumulated first through fourth energy values as the decision value.

6. The method of claim 2 wherein steps (a) and (c) further comprise delay compensating one of the first and second segments.

## Patentansprüche

1. Verfahren zum Bestimmen eines Entscheidungswertes für einen Vorgang aus der Gruppe bestehend aus Erfassung und Kanalschätzung eines empfangenen Spreizspektrumsignals, umfassend:
(a) Empfangen eines ersten Segments des Signals über eine erste Antenne eines Empfängers und Demodulieren des ersten Segments, um ein erstes komplexwertiges Segment auszubilden;
(b) Bestimmen eines ersten Signalcharakteristikwertes des ersten komplexwertigen Segmentes;
(c) Empfangen eines zweiten Segmentes des Signals über eine zweite Antenne des Empfängers und Demodulieren des zweiten Segments, um ein zweites komplexwertiges Segment auszubilden;
(d) Bestimmen eines zweiten Signalcharakteristikwertes des zweiten komplexwertigen Segments; und
(e) Akkumulieren der ersten und zweiten Signalcharakteristikwerte und Ausgeben der akkumulierten Signalcharakteristikwerte als Entscheidungswert für die Verwendung durch ein Element aus der Gruppe bestehend aus einem Erfassungsdetektor oder einem Kanalschätzer.

2. Verfahren gemäß Anspruch 1, wobei der erste und zweite Signalcharakteristikwert jeweils ein erster und zweiter Energiewert sind.

3. Verfahren gemäß Anspruch 2, des Weiteren mit den Schritten, die dem Schritt (d) folgen:
(i) Empfangen eines dritten Segments des Signals über die erste Antenne und Demodulieren des dritten Segments, um ein drittes komplexwertiges Segment auszubilden;
(ii) Bestimmen eines dritten Energiewertes des dritten komplexwertigen Segments;
(iii) Empfangen eines vierten Segments des Signals über die zweite Antenne und Demodulieren des vierten Segments, um ein viertes komplexwertiges Segment auszubilden;
(iv) Bestimmen eines vierten Energiewertes des viertes Segments; und
wobei Schritt (e) des Weiteren das Akkumulieren des dritten und vierten Energiewertes mit dem ersten und zweiten Energiewert und das Ausgeben des akkumulierten ersten bis vierten Energiewerts als der Entscheidungswert umfasst.

4. Verfahren gemäß Anspruch 2, wobei:
Schritt (b) des Weiteren das Akkumulieren des ersten komplexwertigen Segments, das Empfangen eines dritten Segments des Signals über die erste Antenne und Demodulieren des dritten Segments zum Ausbilden eines dritten komplexwertigen Segments, das Akkumulieren des dritten komplexwertigen Segments mit dem ersten komplexwertigen Segment, und das Bestimmen des ersten Energiewertes von dem akkumulierten ersten und dritten komplexwertigen Segment umfasst; und
Schritt (d) des Weiteren das Akkumulieren des zweiten komplexwertigen Segments, das Empfangen eines vierten Segments des Signals über die zweite Antenne und Demodulieren des vierten Segments zum Ausbilden eines vierten komplexwertigen Segments, das Akkumulieren des vierten komplexwertigen Segments mit dem zweiten komplexwertigen Segment, und das Bestimmen des zweiten Energiewertes von dem akkumulierten zweiten und vierten komplexwertigen Segment umfasst.

5. Verfahren gemäß Anspruch 1, wobei Schritt (e) des Weiteren umfasst :
Empfangen des fünften und siebten Segments des Signals über die erste Antenne und Demodulieren des fünften und siebten Segments, um ein fünftes und siebtes komplexwertiges Segment auszubilden, Akkumulieren des fünften und siebten komplexwertigen Segments, und Bestimmen eines dritten Energiewertes von dem akkumulierten fünften und sieblen komplexwertigen Segment;
Empfangen eines sechsten und achten Segments des Signals über die zweite Antenne und Demodulieren des sechsten und achten Segments, um ein sechstes und achtes komplexwertiges Segment auszubilden, Akkumulieren des sechsten und achten komplexwertigen Segments, und Bestimmen eines vierten Energiewertes von dem akkumulierten sechsten und achten komplexwertigen Segment; und
Akkumulieren des dritten und vierten Energiewerts mit dem ersten und zweiten Energiewert und Ausgeben des akkumulierten ersten bis vierten Energlewerts als Entscheldungswert.

6. Verfahren gemäß Anspruch 2, wobei Schritt (a) und (c) des Weiteren eine Verzögerungskompensation des ersten oder zweiten Segments umfasst.

## Revendications

1. Procédé de détermination d'une valeur de décision pour un élément du groupe composé de l'acquisition et de l'estimation de canaux d'un signal à spectre étalé reçu, comprenant :
(a) la réception d'un premier segment du signal par l'intermédiaire d'une première antenne d'un récepteur et la démodulation du premier segment pour former un premier segment de valeur complexe ;
(b) la détermination d'une première valeur caractéristique de signal du premier segment de valeur complexe ;
(c) la réception d'un second segment du signal par l'intermédiaire d'une seconde antenne du récepteur et la démodulation du second segment pour former un second segment de valeur complexe ;
(d) la détermination d'une seconde valeur caractéristique de signal du second segment de valeur complexe ; et
(e) l'accumulation des première et seconde valeurs caractéristiques de signal et la génération des valeurs caractéristiques de signal accumulées en tant que valeur de décision destinée à être utilisée par un élément du groupe composé d'un détecteur d'acquisition et d'un estimateur de canaux.

2. Procédé de la revendication 1 dans lequel les première et seconde valeurs caractéristiques de signal sont des première et seconde valeurs d'énergie, respectivement.

3. Procédé de la revendication 2 comprenant en outre les étapes, suivant l'étape (d), de
(i) réception d'un troisième segment du signal par l'Intermédiaire de la première antenne et la démodulation du troisième segment pour former un troisième segment de valeur complexe ;
(ii) la détermination d'une troisième valeur d'énergie du troisième segment de valeur complexe ;
(iii) la réception d'un quatrième segment du signal par l'Intermédiaire de la seconde antenne et la démodulation du quatrième segment pour former un quatrième segment de valeur complexe ;
(iv) la détermination d'une quatrième valeur d'énergie du quatrième segment ; et
dans lequel l'étape (e) comprend en outre l'accumulation de la troisième et la quatrième valeur d'énergie avec la première et la seconde valeur d'énergie, et la génération des première à quatrième valeurs d'énergie accumulées en tant que valeur de décision.

4. Procédé selon la revendication 2 dans lequel :
l'étape (b) comprend en outre l'accumulation du premier segment de valeur complexe, la réception d'un troisième segment du signal par l'intermédiaire de la première antenne et la démodulation du troisième segment pour former un troisième segment de valeur complexe, l'accumulation du troisième segment de valeur complexe avec le premier segment de valeur complexe, et la détermination de la première valeur d'énergie à partir des premier et troisième segments de valeur complexe ; et
l'étape (d) comprend en outre l'accumulation du second segment de valeur complexe, la réception d'un quatrième segment du signal par l'intermédiaire de la seconde antenne et la démodulation du quatrième segment pour former un quatrième segment de valeur complexe, l'accumulation du quatrième segment de valeur complexe avec le second segment de valeur complexe, et la détermination de la seconde valeur d'énergie à partir des second et quatrième segments de valeur complexe.

5. Procédé de la revendication 4 dans lequel l'étape (e) comprend en outre :
la réception des cinquième et septième segments du signal par l'intermédiaire de la première antenne et la démodulation des cinquième et septième segments pour former des cinquième et septième segments de valeur complexe, l'accumulation des cinquième et septième segments de valeur complexe, et la détermination d'une troisième valeur d'énergie à partir des cinquième et septième segments de valeur complexe accumulés ;
la réception des sixième et huitième segments du signal par l'intermédiaire de la seconde antenne et la démodulation des sixième et huitième segments pour former des sixième et huitième segments de valeur complexe, l'accumulation des sixième et huitième segments de valeur complexe, et la détermination d'une quatrième valeur d'énergie à partir des sixième et huitième segments de valeur complexe accumulés ; et
l'accumulation des troisième et quatrième valeurs d'énergie avec les première et seconde valeurs d'énergie et la génération des première à quatrième valeurs d'énergie accumulées en tant que valeur de décision.

6. Procédé de la revendication 2 dans lequel les étapes (a) et (c) comprennent en outre la compensation du temps de propagation de l'un des premier et second segments.
